# EUROPÄISCHE PATENTSCHRIFT

(11) **EP 2 988 848 B1**
(45) Veröffentlichungstag und Bekanntmachung des Hinweises auf die Patenterteilung: **01.09.2021**
(21) Anmeldenummer: 14716603.7
(22) Anmeldetag: 11.04.2014
(51) Int. Cl.: B01D 46/00, B01D 46/10

(54) **LUFTFILTEREINRICHTUNG**
AIR FILTER DEVICE
DISPOSITIF DE FILTRE À AIR

(30) Priorität: 22.04.2013 DE 102013207250
(43) Veröffentlichungstag der Anmeldung: 02.03.2016
(73) Patentinhaber: Mahle International GmbH, 70376 Stuttgart (DE)
(72) Erfinder: TRAVNIK, Peter, 9010 Klagenfurt am Wörthersee (AT); VON MERKATZ, Hendrik, 71686 Remseck (DE); RUFFET, Valentin, 73760 Ostfildern (DE); SUTSCHITSCH, Hannes, 9141 Eberndorf (AT)
(74) Vertreter: BRP Renaud & Partner mbB Rechtsanwälte Patentanwälte Steuerberater
(86) Internationale Anmeldenummer: PCT/EP2014/057428
(87) Internationale Veröffentlichungsnummer: WO 2014/173708

(56) Entgegenhaltungen:
- EP-A1- 1 685 889
- EP-A2- 0 534 079
- DE-A1-102010 045 985

## Beschreibung

Die vorliegende Erfindung betrifft ein Filterelement für eine Luftfiltereinrichtung einer Frischluftanlage einer Brennkraftmaschine, insbesondere eines Kraftfahrzeugs, mit den Merkmalen des Oberbegriffs des Anspruchs 1. Die Erfindung betrifft außerdem eine Kombination eines derartigen Filterelements mit einem Funktionsteil. Die Erfindung betrifft ferner eine Luftfiltereinrichtung für eine Frischluftanlage einer Brennkraftmaschine, insbesondere eines Kraftfahrzeugs, das mit einem derartigen Filterelement bzw. mit einer solchen Kombination ausgestattet ist. Schließlich betrifft die Erfindung noch ein Baukastensystem zum Herstellen derartiger Kombinationen.

Die Druckschrift DE102010045985 A1 beschreibt die Luftzuführung einer Brennkraftmaschine, wobei der Luftansaugtrakt einen Luftfilter, ein Luftleitelement sowie einen Luftmassensensor enthält.

Aus der EP 0 534 079 A2 ist eine Luftfiltereinrichtung für eine Frischluftanlage einer Brennkraftmaschine bekannt, die in einem Gehäuse ein Filterelement enthält, das einen Filterkörper aus einem Filtermaterial und einen Dichtungsrahmen aus einem Dichtungsmaterial aufweist. Der Dichtungsrahmen besitzt einen dem Filterkörper zugeordneten Filterabschnitt und fasst den Filterkörper randseitig, geschlossen umlaufend ein. Das bekannte Filterelement weist außerdem ein von Luft durchströmbares Funktionsteil in Form eines Gitters auf, das von einem Funktionsabschnitt des Dichtungsrahmens randseitig, geschlossen umlaufend, eingefasst ist. Beim bekannten Filterelement sind der Filterkörper und das Funktionsteil fest mit dem Dichtungsrahmen verbunden, insbesondere randseitig darin eingebettet.

Es besteht das Bedürfnis, ein derartiges Filterelement bei unterschiedlich konfigurierten Luftfiltereinrichtungen verwenden zu können. Beispielsweise können bei unterschiedlichen Luftfiltereinrichtungen am zugehörigen Gehäuse eine Lufteinlassöffnung und/oder eine Luftauslassöffnung unterschiedlich orientiert sein.

Die vorliegende Erfindung beschäftigt sich mit dem Problem, für ein Filterelement der eingangs genannten Art einen Weg aufzuzeigen, der eine Anpassung an unterschiedliche Ausgestaltungen einer Luftfiltereinrichtung vereinfacht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Filterelement mit einem Tragrahmen auszustatten, der dazu ausgestaltet ist, daran ein Funktionsteil zu befestigen. Der Tragrahmen ist nun seinerseits von einem Funktionsabschnitt des Dichtungsrahmens randseitig, geschlossen umlaufend eingefasst. Der Tragrahmen selbst fasst eine Funktionsteilöffnung geschlossen umlaufend ein. Während beim bekannten Filterelement das Funktionsteil selbst in den Dichtungsrahmen integriert ist, erfolgt beim erfindungsgemäßen Filterelement die Integration eines Tragrahmens in den Dichtungsrahmen, wodurch es möglich ist, am Tragrahmen unterschiedliche Funktionsteile anzubringen. Auf diese Weise kann das Filterelement bedarfsabhängig mit einem geeigneten Funktionsteil ausgestattet werden, was die Adaption des Filterelements an unterschiedliche Anwendungsfälle vereinfacht. Das jeweilige Funktionsteil ist dabei ein bezüglich des Tragrahmens separates Bauteil.

Ferner kann gemäß einer bevorzugten Ausführungsform vorgesehen sein, dass die Funktionsteilöffnung vollständig offen ist. Somit steht die gesamte Funktionsteilöffnung zum Einsetzen eines Funktionsteils zur Verfügung, da sich im offenen Querschnitt der Funktionsteilöffnung keine Störkontur befindet und die umfangsseitige Begrenzung der Funktionsteilöffnung ausschließlich durch den Tragrahmen erfolgt.

Ferner kann vorgesehen sein, dass der Tragrahmen nur eine geschlossen um die Funktionsteilöffnung umlaufende Einfassung bildet und nur zum Befestigen des jeweiligen Funktionsteils vorgesehen ist, das bezüglich des Tragrahmens ein separates Bauteil ist. Insbesondere besitzt der Tragrahmen keine Gitterstruktur. Somit ist für das jeweilige Funktionsteil eine maximale Flexibilität hinsichtlich der jeweils zu realisierenden Funktionalität geschaffen.

Gemäß einer vorteilhaften Ausführungsform kann der Dichtungsrahmen einen Rahmenabschnitt aufweisen, der dem Filterabschnitt und dem Funktionsabschnitt gemeinsam zugeordnet ist und der sich entlang des Filterkörpers und entlang des Tragrahmens erstreckt. Durch diese Bauform sind der Filterabschnitt und der Funktionsabschnitt über den gemeinsamen Rahmenabschnitt unmittelbar benachbart angeordnet, so dass auch der Filterkörper und der Tragrahmen am Filterelement unmittelbar benachbart angeordnet sind, wodurch das Filterelement eine kompakte Bauform besitzt.

Zweckmäßig erstreckt sich der Dichtungsrahmen in einer Dichtungsebene. In dieser Dichtungsebene erstrecken sich somit der Filterabschnitt und der Funktionsabschnitt sowie der ggf. vorhandene Rahmenabschnitt. Dadurch kann das Filterelement vergleichsweise flach konzipiert werden.

Der Dichtungsrahmen ist bevorzugt einstückig hergestellt. Insbesondere kann der Dichtungsrahmen an den Filterkörper und an den Tragrahmen angeschäumt sein. Hierdurch lässt sich eine besonders innige und feste Verbindung zwischen dem Dichtungsrahmen und dem Filterkörper einerseits und dem Tragrahmen andererseits realisieren. Insbesondere kann der Tragrahmen randseitig in den Funktionsabschnitt des Dichtungsrahmens eingebettet sein. Optional kann der Tragrahmen in dem in das Dichtungsmaterial eingebetteten Randbereich Durchbrüche und/oder Hinterschnittkonturen aufweisen, wodurch sich eine formschlüssige Verankerung des Tragrahmens im Dichtungsrahmen ergibt.

Der in das Dichtungsmaterial eingebettete Randabschnitt des Tragrahmens ist zweckmäßig in der Umfangsrichtung vollständig umlaufend ausgeführt.

Bei der Erfindung sind am Tragrahmen Rastmittel ausgebildet, die zum Befestigen des Funktionsteils am Tragrahmen mit dazu komplementären Gegenrastmitteln zusammenwirken, die dann am Funktionsteil ausgebildet sind. Die Rastmittel wirken mit den Gegenrastmitteln zum Ausbilden einer Verrastung zusammen. Eine derartige Verrastung kann als lösbare Verrastung oder als unlösbare Verrastung konzipiert sein.

Der Filterkörper kann beispielsweise als Plattenfilterelement ausgestaltet sein, dessen Filtermaterial plissiert ist. Hierdurch lässt sich der Filterkörper vergleichsweise flach konzipieren, was in Verbindung mit einer ebenen Ausgestaltung des Dichtungsrahmens zu einer extrem kompakten Bauform für das Filterelement führt.

Eine erfindungsgemäße Kombination umfasst ein Filterelement der vorstehend beschriebenen Art sowie ein Funktionsteil, das am Tragrahmen des Filterelements befestigt ist. Das Funktionsteil ist von Luft durchströmbar ausgestaltet. Es ist in die Funktionsteilöffnung eingesetzt und kann diese mehr oder weniger ausfüllen.

Entsprechend einer vorteilhaften Ausführungsform kann das Funktionsteil einen komplementär zum Tragrahmen geformten Funktionsteilrahmen aufweisen, wobei der Tragrahmen im montierten Zustand mit dem Funktionsteilrahmen randseitig, geschlossen umlaufend in Kontakt steht. Hierdurch füllt das Funktionsteil die Funktionsteilöffnung des Tragrahmens vollständig aus.

Bei einer anderen Ausführungsform kann das Funktionsteil in der Funktionsteilöffnung wenigstens einen durchströmbaren Bereich und wenigstens einen nicht-durchströmbaren Bereich ausbilden. Durch diese Konfiguration kann mit Hilfe des Funktionsteils die Größe des durchströmbaren Querschnitts der Funktionsteilöffnung bestimmt werden. Je nach Funktionsteil kann somit der durchströmbare Querschnitt der Funktionsteilöffnung größer oder kleiner definiert werden.

Bei einer anderen vorteilhaften Ausführungsform kann das Funktionsteil wenigstens eine Leitschaufel zur Strömungslenkung aufweisen. In diesem Fall dient das Funktionsteil zur Realisierung einer widerstandsarmen Strömungsumlenkung bei seiner Durchströmung. Das Funktionsteil lässt sich somit dazu verwenden, die das Funktionsteil durchströmende Luft in Richtung einer Luftauslassöffnung eines Gehäuses der zugehörigen Luftfiltereinrichtung umzulenken.

Gemäß einer anderen Ausführungsform kann das Funktionsteil eine Tragwand aufweisen, an der an zwei voneinander abgewandten Seiten jeweils wenigstens eine Leitschaufel angeordnet ist. Bei einer derartigen Bauform besitzt auch die Tragwand selbst eine Strömungsleitfunktion. Gleichzeitig vereinfacht eine derartige Tragwand eine Variantenbildung hinsichtlich der Anzahl und Anordnung der Leitschaufeln. Die Tragwand kann eben oder gekrümmt konfiguriert sein. Bevorzugt ist eine gekrümmte Konfiguration, bei welcher die Tragwand eine verbesserte Strömungsleitfunktion besitzt.

Entsprechend einer besonders vorteilhaften Weiterbildung kann zumindest eine solche Leitschaufel ein Gegenrastelement besitzen, das zum Befestigen des Funktionsteils am Tragrahmen mit einem am Tragrahmen ausgebildeten Rastmittel zusammenwirkt. Die Rastmittel und die dazu komplementären Gegenrastmittel können beispielsweise durch Rastnasen gebildet sein, die mit dazu passenden Rastkonturen zusammenwirken, um die gewünschte Verrastung zu bilden. Zweckmäßig sind dabei die Rastnasen an den Leitschaufeln ausgebildet, während eine dazu passende Rastkontur am Tragrahmen vorgesehen ist. Beispielsweise kann der Tragrahmen einen die Funktionsteilöffnung geschlossen umlaufenden Innenrand aufweisen, der als Rastkontur dient.

Eine erfindungsgemäße Luftfiltereinrichtung, die für eine Frischluftanlage einer Brennkraftmaschine vorgesehen ist, besitzt ein Gehäuse zur Aufnahme einer Kombination nach der vorstehend beschriebenen Art. Dabei trennt der Filterkörper im Gehäuse einen Rohraum von einem Reinraum. Ein Reinluftpfad führt im Gehäuse vom Reinraum durch das Funktionsteil zu einem Funktionsraum des Gehäuses oder zu einem Reinluftauslass des Gehäuses. Das Funktionsteil ist dabei zur Umlenkung einer dem Reinluftpfad folgenden Reinluftströmung vom Reinraum zum Funktionsraum oder zum Reinluftauslass ausgestaltet. Auf diese Weise wird die Durchströmung des Gehäuses hinsichtlich eines reduzierten Strömungswiderstands verbessert.

Üblicherweise ist in einer Frischluftanlage ein Sensor zur Luftmassenmessung bzw. zur Messung eines Luftvolumenstroms angeordnet. In der Regel ist ein derartiger Sensor als Heißfilmmesser ausgestaltet. Üblicherweise befindet sich ein derartiger Sensor in der Frischluftanlage stromab der Luftfiltereinrichtung. Bei einer besonders vorteilhaften Ausführungsform kann jedoch ein derartiger Sensor im Funktionsraum des Gehäuses angeordnet sein. Somit ist besagter Sensor im bzw. am Gehäuse angeordnet und in die Luftfiltereinrichtung integriert. Auf diese Weise lassen sich enge Positionstoleranzen für die Anordnung des Sensors vergleichsweise einfach einhalten.

Bei alternativen Ausgestaltungen der Erfindung kann das Funktionsteil auch auf der Rohseite angeordnet sein. Bei einer derartigen Ausgestaltung dient das Funktionsteil einer gleichmäßigen Anströmung und in der Folge einer gleichmäßigen Beladung des Filterelements. Gemäß weiteren Ausgestaltungen kann das Filterelement über jeweils ein Funktionsteil im Rohluftbereich und im Reinluftbereich verfügen.

Gemäß einer anderen vorteilhaften Ausführungsform kann die zuvor genannte Trennwand des Funktionsteils in den Reinraum hineinragen, also ggf. über die Dichtungsebene vorstehen.

Ein erfindungsgemäßes Baukastensystem zum Herstellen von Kombinationen der vorstehend beschriebenen Art umfasst ein Filterelement und wenigstens zwei verschiedene Funktionsteile, die wahlweise am Tragrahmen des Filterelements befestigbar sind und die sich durch unterschiedliche Geometrien und/oder Funktionen voneinander unterscheiden. Beispielsweise können die unterschiedlichen Funktionsteile verschiedene durchströmbare Querschnitte in der Funktionsteilöffnung definieren und/oder verschiedene Umlenkwinkel realisieren und/oder unterschiedliche Schaufelzahlen besitzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Luftfiltereinrichtung bei geöffnetem Gehäuse,
- Fig. 2: eine isometrische Ansicht einer Kombination aus einem Filterelement und einem Funktionsteil,
- Fig. 3: eine vergrößerte Detailansicht der Luftfiltereinrichtung aus Fig. 1 im Bereich des Funktionsteils,
- Fig. 4: eine isometrische Ansicht des Funktionsteils,
- Fig. 5: eine isometrische Ansicht der Kombination im Bereich des Funktionsteils,
- Fig. 6: ein Längsschnitt der Kombination im Bereich des Funktionsteils,
- Fig. 7: eine Draufsicht der Kombination,
- Fig. 8: eine Draufsicht wie in Fig. 7, jedoch bei einer anderen Ausführungsform,
- Fig. 9: eine Draufsicht wie in den Figuren 7 und 8, jedoch bei einer weiteren Ausführungsform.

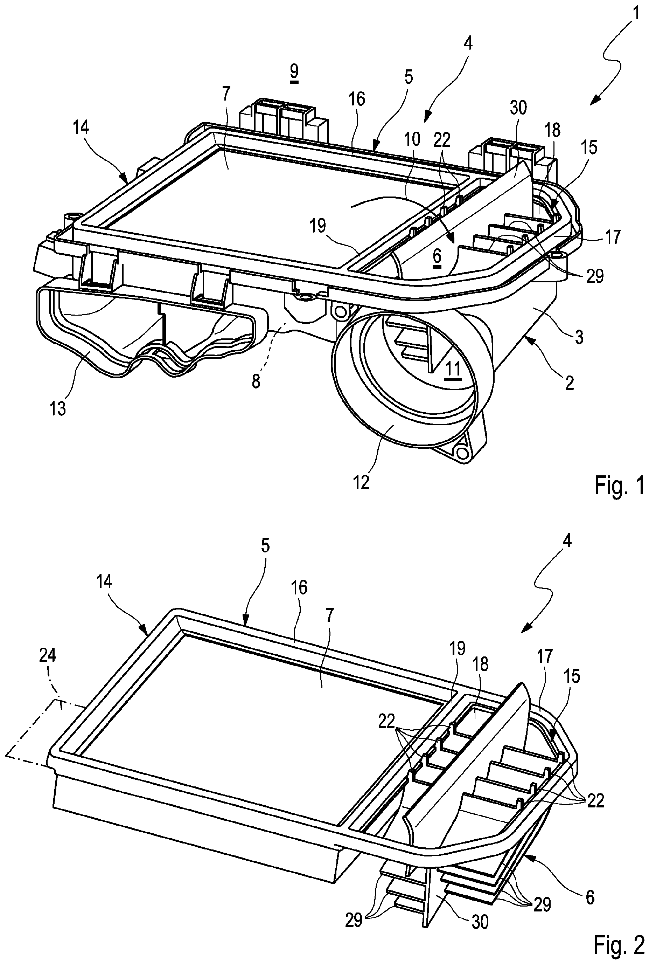

Entsprechend Fig. 1 umfasst eine Luftfiltereinrichtung 1, die für eine Verwendung in einer Frischluftanlage einer Brennkraftmaschine, die bevorzugt in einem Kraftfahrzeug angeordnet sein kann, vorgesehen ist, ein Gehäuse 2, das beispielsweise in Schalenbauweise ausgeführt sein kann und dementsprechend eine Unterschale 3 und eine hier nicht gezeigte Oberschale aufweisen kann. In das Gehäuse 2 ist eine Kombination 4 eingesetzt, die durch ein Filterelement 5 und ein Funktionsteil 6 gebildet ist. Im Gehäuse 2 trennt ein Filterkörper 7 des Filterelements 5 einen in Fig. 1 unterhalb des Filterkörpers 7 liegenden Rohraum 8 von einem in Fig. 1 oberhalb des Filterkörpers 7 liegenden Reinraum 9. Im Gehäuse 2 führt ein Reinluftpfad 10 vom Reinraum 9 durch das Funktionsteil 6 zu einem Funktionsraum 11 des Gehäuses 2, der in Fig. 1 wie der Rohraum 8 in der Unterschale 3, jedoch rechts neben dem Rohraum 8 angeordnet ist. Der Funktionsraum 11 führt zu einem Reinluftauslass 12, während der Rohraum 8 mit einem Rohlufteinlass 13 fluidisch verbunden ist. Im Beispiel der Fig. 1 sind Reinluftauslass 12 und Rohlufteinlass 13 jeweils an der Unterschale 3 ausgebildet.

Zumindest bei der in den Figuren 1 bis 4 gezeigten Ausführungsform ist das Funktionsteil 6 zur Umlenkung einer Reinluftströmung ausgestaltet, die dem Reinluftpfad 10 folgt und dementsprechend vom Reinraum 9 in den Funktionsraum 11 bzw. in Richtung des Reinluftauslasses 12 umgelenkt wird. Stromab des Reinluftauslasses 12 kann beispielsweise ein Sensor zur Luftmassenmessung bzw. zur Luftvolumenstrommessung angeordnet sein. Ebenso ist denkbar, einen derartigen Sensor im Funktionsraum 11 anzuordnen.

Entsprechend den Figuren 2 bis 9 umfasst das Filterelement 5 den Filterkörper 7, der aus einem Filtermaterial hergestellt ist, einen Dichtungsrahmen 14 und einen Tragrahmen 15. Der Dichtungsrahmen 14 besteht aus einem Dichtungsmaterial und weist einen Filterabschnitt 16 sowie einen Funktionsabschnitt 17 auf. Der Filterabschnitt 16 bildet eine randseitig geschlossen umlaufende Einfassung für den Filterkörper 7. Der Funktionsabschnitt 17 bildet dagegen eine geschlossen umlaufende Einfassung für den Tragrahmen 15. Im Gehäuse 2 dient der Dichtungsrahmen 14 außerdem dazu, die Unterschale 3 gegenüber der Oberschale abzudichten, so dass ein Gehäuseinnenraum gegenüber einer Umgebung des Gehäuses 2 luftdicht verschlossen ist. Des Weiteren dichtet der Dichtungsrahmen 14 im Gehäuse 2 den Rohraum 8 gegenüber dem Reinraum 9.

Der Tragrahmen 15 bildet eine geschlossen umlaufende Einfassung für eine Funktionsteilöffnung 18 und dient zum Befestigen des Funktionsteils 6 am Filterelement 5. Die Funktionsteilöffnung 18 ist dabei vollständig offen oder frei und steht mit ihrem gesamten Öffnungsquerschnitt zur Unterbringung des jeweiligen Funktionsteils 6 zur Verfügung. Demnach ist die Funktionsteilöffnung 18 im bevorzugten Fall ausschließlich durch ihre Begrenzung durch den Tragrahmen 15 definiert. Auch der Tragrahmen 15 hat bevorzugt keine Zusatzfunktion zu den beiden genannten Funktionen, wonach er einerseits die Einfassung der Funktionsteilöffnung 18 bildet und andererseits zur Befestigung des jeweiligen Funktionsteils 6 dient.

Der Filterkörper 7 ist bevorzugt aus einem plissierten, bahnenförmigen Filtermaterial hergestellt. Der Dichtungsrahmen 14 ist bevorzugt aus einem geschäumten Dichtungsmaterial hergestellt. Der Tragrahmen 15 ist bevorzugt aus Kunststoff spritzgeformt. Grundsätzlich kann es sich beim Tragrahmen 15 auch um ein Metallbauteil, vorzugsweise um ein Blechformteil handeln.

Der Dichtungsrahmen 14 weist hier einen Rahmenabschnitt 19 auf, der dem Filterabschnitt 16 und dem Funktionsabschnitt 17 gemeinsam zugeordnet ist. Dementsprechend erstreckt sich dieser Rahmenabschnitt 19 entlang des Filterkörpers 7 und entlang des Tragrahmens 15. Bei den hier gezeigten Beispielen ist der Rahmenabschnitt 19 als geradliniger Steg ausgestaltet.

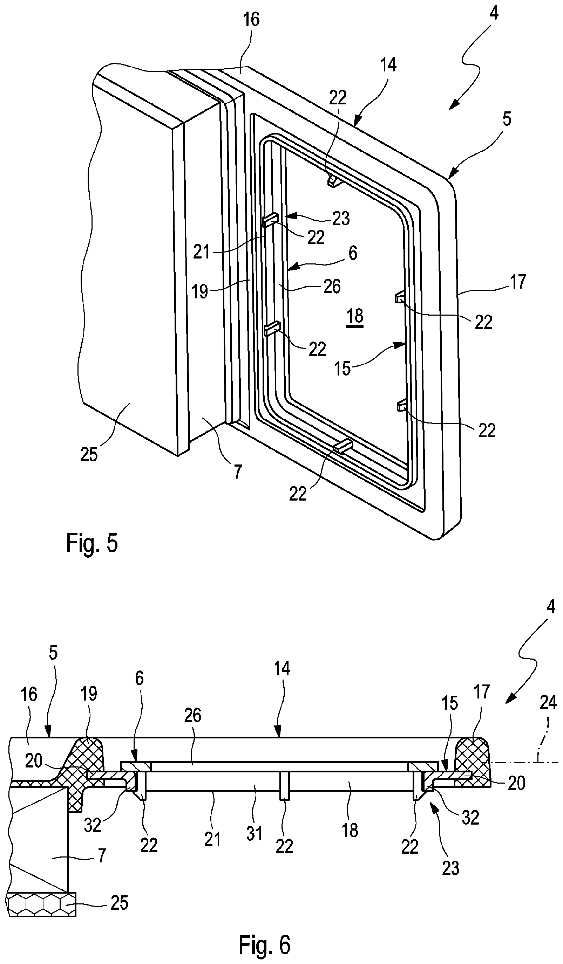

Zweckmäßig ist der Dichtungsrahmen 14 mit seinem Filterabschnitt 16, seinem Funktionsabschnitt 17 und dem Rahmenabschnitt 19 einstückig an den Filterkörper 7 und an den Tragrahmen 15 angeschäumt. Das Anschäumen des Dichtungsrahmens 14 an den Tragrahmen 15 erfolgt zweckmäßig so, dass ein in Fig. 6 erkennbarer Außenrand 20 des Tragrahmens 15 im Dichtungsmaterial des Dichtungsrahmens 14 eingebettet ist. Der Außenrand 20 ist zweckmäßig geschlossen umlaufend konfiguriert, so dass der Tragrahmen 15 luftdicht vom Funktionsabschnitt 17 eingefasst ist. Der Tragrahmen 15 kann im Bereich seines Außenrands 20 nicht gezeigte Durchbrüche und/oder Hinterschnittkonturen aufweisen, die eine formschlüssige Einbettung des Außenrands 20 in den Dichtungsrahmen 14 ermöglichen.

Am Tragrahmen 15 sind vorzugsweise Rastmittel 21 ausgebildet, die mit Gegenrastmitteln 22 zum Ausbilden einer Verrastung 23 zusammenwirken. Die Gegenrastmittel 22 sind komplementär zu den Rastmitteln 21 des Tragrahmens 15 ausgestaltet und befinden sich am Funktionsteil 6. Die Verrastung 23 ist hier durch Rasthaken und eine dazu passende Rastkontur gebildet. Bei den hier gezeigten Beispielen definieren die Rastmittel 21 des Tragrahmens 15 eine derartige Rastkontur, während die Gegenrastmittel 22 des Funktionsteils 6 als Rasthaken ausgeführt sind.

Der Dichtungsrahmen 14 erstreckt sich in einer Dichtungsebene 24. In dieser Dichtungsebene 24 liegen der Filterabschnitt 16 und der Funktionsabschnitt 17 nebeneinander und erstrecken sich ebenfalls in der Dichtungsebene 24. Somit ist der Filterkörper 7 bevorzugt als Plattenfilterelement mit plissiertem Filtermaterial konzipiert. In den Figuren 5 bis 7 ist an einer Anströmseite des Filterkörpers 7, die im eingebauten Zustand dem Rohraum 8 zugewandt ist, ein Vorfilterkörper 25 angeordnet, der beispielsweise an den Filterkörper 7 angeklebt oder angeschweißt sein kann.

In einem Baukastensystem können nun derartige, gleichförmige Filterelemente 5 sowie mehrere unterschiedliche Funktionsteile 6 bevorratet werden, wobei die unterschiedlichen Funktionsteile 6 jeweils so angepasst sind, dass sie jeweils an den Tragrahmen 15 des jeweiligen Filterelements 5 befestigt werden können. Der Tragrahmen 15 definiert somit eine mechanische Schnittstelle, die es ermöglicht, die unterschiedlichen Funktionsteile 6 mechanisch mit dem jeweiligen Filterelement 5 zu verbinden.

Bei der in den Figuren 5 bis 7 gezeigten Ausführungsform kann das Funktionsteil 6 einen komplementär zum Tragrahmen 15 geformten Funktionsträgertragrahmen 26 aufweisen, der im montierten Zustand mit dem Tragrahmen 15 randseitig, geschlossen umlaufend in Kontakt steht. Hierdurch kann eine vorbestimmte Positionierung des Funktionsteils 6 am Tragrahmen 15 besonders einfach realisiert werden. Gleichzeitig kann eine hinreichende Abdichtung zwischen Funktionsteil 6 und Tragrahmen 15 erreicht werden.

In den Figuren 5 bis 7 ist der Funktionsträger 6 nicht vollständig dargestellt. Insbesondere ist der Funktionsträger 6 hier nur im Bereich seines Funktionsträgertragrahmens 26 dargestellt, an dem die Gegenrastmittel 22 ausgeformt sind. Es ist klar, dass der Funktionsträger 6 weitere Komponenten aufweisen kann, die dann zweckmäßig vom Funktionsträgerrahmen 26 eingefasst sind und insbesondere daran ausgebildet sein können. Beispielsweise kann der Funktionsträger 6 eine hier nicht gezeigte Gitterstruktur aufweisen, die eine vom Funktionsträgerrahmen 26 eingefasste Öffnung ausfüllt und die integral am Funktionsträgerrahmen 26 ausgeformt sein kann.

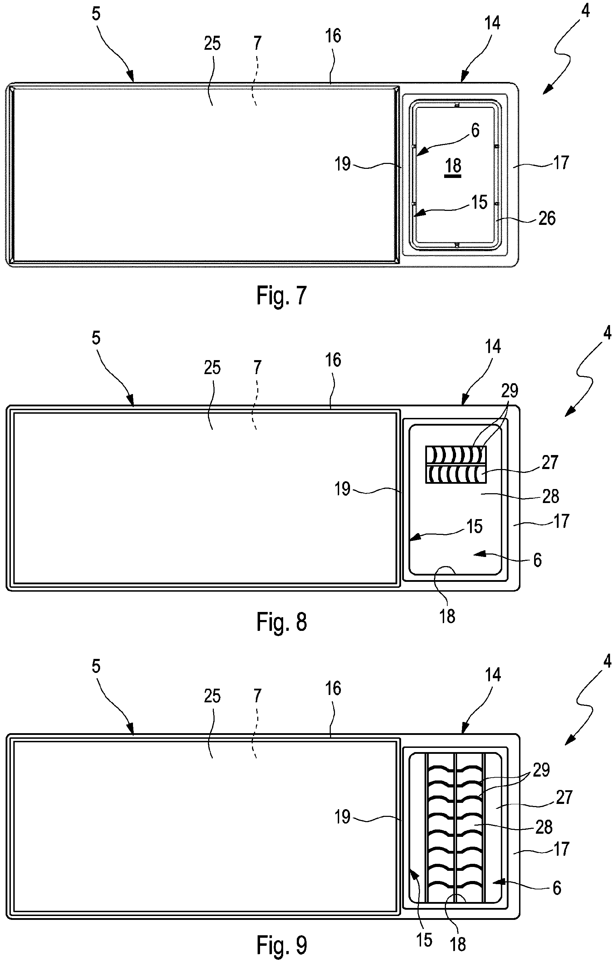

Entsprechend den Figuren 8 und 9 kann das jeweilige Funktionsteil 6 innerhalb der Funktionsteilöffnung 18 zumindest einen durchströmbaren Bereich 27 und wenigstens einen nicht-durchströmbaren Bereich 28 ausbilden. In den Figuren 8 und 9 sind dabei unterschiedliche Beispiele wiedergegeben, die veranschaulichen, wie mit Hilfe des jeweiligen Funktionsteils 6 unterschiedlich große durchströmbare Bereiche 27 bzw. unterschiedlich große nicht-durchströmbare Bereiche 28 durch Verwenden unterschiedlicher Funktionsteile 6 realisierbar sind.

Wie sich insbesondere den Figuren 1 bis 4 und 8 sowie 9 entnehmen lässt, kann das Funktionsteil 6 zumindest eine Leitschaufel 29 aufweisen. Bevorzugt besitzt das Funktionsteil 6 mehrere Leitschaufeln 29. Die Leitschaufeln 29 dienen zur Strömungsumlenkung und können dementsprechend gekrümmt ausgeführt sein.

Zumindest bei der in den Figuren 1 bis 4 gezeigten Ausführungsform besitzt das Funktionsteil 6 eine Tragwand 30, an der an zwei voneinander abgewandten Seiten jeweils zumindest eine Leitschaufel 29 angeordnet ist. Im gezeigten Beispiel befinden sich an den voneinander abgewandten Seiten der Tragwand 30 jeweils mehrere Leitschaufeln 29. Beachtenswert ist, dass auch die Tragwand 30 eine Strömungsleitfunktion sowie eine Strömungsumlenkfunktion aufweisen kann. Wie sich den Figuren 1 und 2 entnehmen lässt, steht die Tragwand 30 über die Dichtungsebene 24 vor, derart, dass sie bis in den Reinraum 29 hineinragt. In diesem Bereich ist sie zweckmäßig auch gekrümmt. Auf diese Weise kann die Strömungsumlenkung vom Reinraum 9 in den Funktionsraum 11 verbessert werden.

Bei der in den Figuren 1 bis 3 gezeigten Ausführungsform sind die Gegenrastelemente 22, also insbesondere die Rasthaken, an den Leitschaufeln 29 ausgeformt. Insbesondere besitzt jede Leitschaufel 29 ein derartiges Gegenrastelement 22, vorzugsweise in Form einer Rastnase bzw. eines Rasthakens. Im eingebauten Zustand verrasten diese Gegenrastelemente 22 mit dem jeweiligen Rastelement 21 des Tragrahmens 15. Bei der Ausführungsform der Figuren 1 bis 3 ist das jeweilige Rastelement 21 des Tragrahmens 15 durch einen umlaufenden Innenrand 31 des Tragrahmens 15 gebildet. Im Unterschied dazu ist bei der in den Figuren 5 bis 7 gezeigten Ausführungsform das jeweilige Rastmittel 21 durch einen am Innenrand 31 umlaufenden, vorzugsweise senkrecht, abstehenden Kragen 32 gebildet.

Bei der in den Figuren 1 bis 3 gezeigten Ausführungsform wird der Innenrand 31 zwischen den einzelnen Rasthaken 22 und einer Schulter 37 der jeweiligen Leitschaufel 29 verspannt. Bei der in den Figuren 5 bis 7 gezeigten Ausführungsform wird dagegen der Kragen 32 zwischen den Rasthaken 22 und dem Funktionsteilrahmen 26 verspannt.

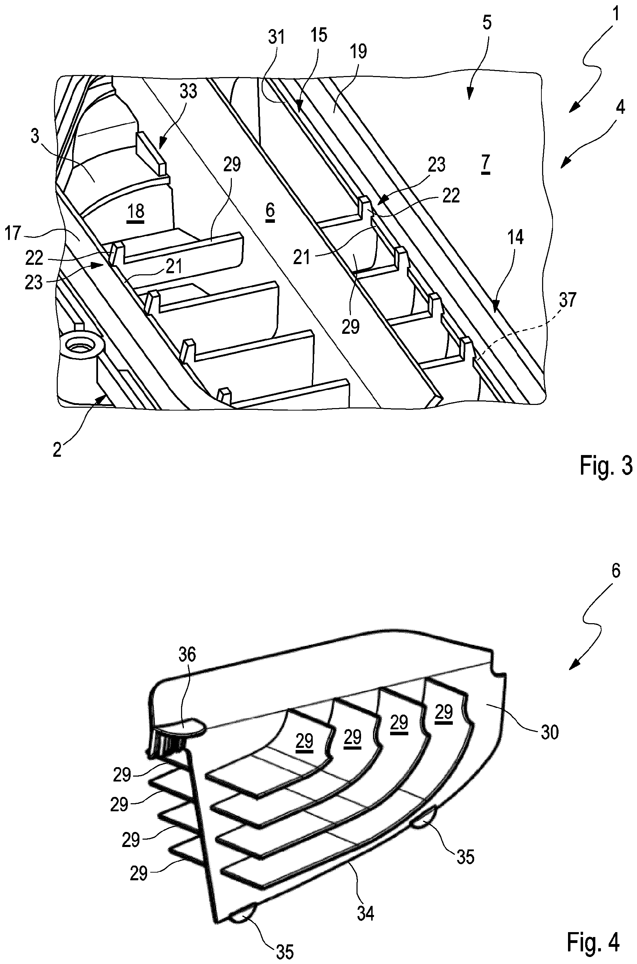

Wie sich Fig. 3 entnehmen lässt, kann die Tragwand 30 des Funktionsteils 6 im Einbauzustand der Kombination 4 dazu dienen, das Funktionsteil 6 außerdem am Gehäuse 2, hier an der Unterschale 3, abzustützen und zu positionieren. Hierzu kann beispielsweise eine Nut-Feder-Führung 33 realisiert werden, die einen formschlüssigen Eingriff zwischen der Tragwand 30 und dem Gehäuse 2 bzw. der Unterschale 3 ermöglicht.

Gemäß Fig. 4 kann eine der Unterschale 3 zugewandte Außenkontur 34 der Tragwand 30 zur Abstützung an der Unterschale 3 konzipiert sein. Beispielsweise können hierzu konvexe Kontaktkonturen 35 an dieser Außenkontur 34 ausgeformt sein, die eine punktförmige, insbesondere vorgespannte, Kontaktierung mit der Unterschale 3 ermöglichen. Ferner ist in Fig. 4 ein Griffelement 36 angedeutet, das die Handhabung des Funktionsteils 6 vereinfacht. ****

## Patentansprüche

1. Filterelement für eine Luftfiltereinrichtung (1) einer Frischluftanlage einer Brennkraftmaschine, insbesondere eine Kraftfahrzeugs,
- mit einem Filterkörper (7) aus einem Filtermaterial,
- mit einem Dichtungsrahmen (14) aus einem Dichtungsmaterial, der einen dem Filterkörper (7) zugeordneten Filterabschnitt (16) aufweist, der den Filterkörper (7) randseitig, geschlossen umlaufend einfasst,
**gekennzeichnet durch**,
- einen Tragrahmen (15) zum Befestigen eines Funktionsteils (6),
- wobei der Tragrahmen (15) eine Funktionsteilöffnung (18) aufweist und geschlossen umlaufend einfasst,
- wobei der Dichtungsrahmen (14) einen dem Tragrahmen (15) zugeordneten Funktionsabschnitt (17) aufweist, der den Tragrahmen (15) randseitig, geschlossen umlaufend einfasst,
- wobei am Tragrahmen (15) Rastmittel (21) ausgebildet sind, die zum Befestigen des Funktionsteils (6) am Tragrahmen (15) mit dazu komplementären Gegenrastmitteln (22) zusammenwirken, die am Funktionsteil (6) ausgebildet sind,
- wobei der Tragrahmen (15) bezüglich des Dichtungsrahmens (14) und des Funktionsteils (6) ein separates Bauteil ist.

2. Filterelement nach Anspruch 1,
**dadurch gekennzeichnet,**
**dass** die Funktionsteilöffnung (18) vollständig offen ist.

3. Filterelement nach Anspruch 1 oder 2,
**dadurch gekennzeichnet,**
**dass** der Tragrahmen (15) nur eine geschlossen um die Funktionsteilöffnung (18) umlaufende Einfassung bildet und zum Befestigen des jeweiligen Funktionsteils (6) vorgesehen ist, das bezüglich des Tragrahmens (15) ein separates Bauteil ist.

4. Filterelement nach einem der Ansprüche 1 bis 3,
**dadurch gekennzeichnet,**
**dass** der Dichtungsrahmen (14) einen Rahmenabschnitt (19) aufweist, der dem Filterabschnitt (16) und dem Funktionsabschnitt (17) gemeinsam zugeordnet ist und der sich entlang des Filterkörpers (7) und entlang des Tragrahmens (15) erstreckt.

5. Filterelement nach einem der Ansprüche 1 bis 4,
**dadurch gekennzeichnet,**
- **dass** der Dichtungsrahmen (14) an den Filterkörper (7) und an den Tragrahmen (15) angeschäumt ist, und/oder
- wobei der Dichtungsrahmen (14) aus einem geschäumten Dichtungsmaterial und der Tragrahmen (15) aus spritzgeformten Kunststoff oder aus Metall hergestellt sind.

6. Filterelement nach einem der Ansprüche 1 bis 5,
**dadurch gekennzeichnet,**
**dass** der Tragrahmen (15) in das Dichtungsmaterial des Dichtungsrahmens (14) eingebettet ist.

7. Filterelement nach einem der Ansprüche 1 bis 6,
**dadurch gekennzeichnet,**
**dass** sich der Dichtungsrahmen (14) in einer Dichtungsebene (24) erstreckt, in welcher der Filterabschnitt (16) und der Funktionsabschnitt (17) nebeneinander angeordnet sind.

8. Filterelement nach einem der Ansprüche 1 bis 7,
**dadurch gekennzeichnet,**
**dass** der Filterkörper (7) als Plattenfilterelement ausgestaltet ist, dessen Filtermaterial plissiert ist.

9. Kombination aus einem Filterelement (5) nach einem der Ansprüche 1 bis 8 und einem Funktionsteil (6), das am Tragrahmen (15) des Filterelements (5) befestigt ist.

10. Kombination nach Anspruch 9,
**dadurch gekennzeichnet,**
**dass** das Funktionsteil (6) einen komplementär zum Tragrahmen (15) geformten Funktionsteilrahmen (26) aufweist, wobei der Tragrahmen (15) im montierten Zustand mit dem Funktionsteilrahmen (26) randseitig, geschlossen umlaufend in Kontakt steht.

11. Kombination nach Anspruch 9 oder 10,
**dadurch gekennzeichnet,**
**dass** das Funktionsteil (6) in der Funktionsteilöffnung (18) wenigstens einen durchströmbaren Bereich (27) und wenigstens einen nicht-durchströmbaren Bereich (28) ausbildet.

12. Kombination nach einem der Ansprüche 9 bis 11,
**dadurch gekennzeichnet,**
**dass** das Funktionsteil (6) wenigstens eine Leitschaufel (29) zur Strömungslenkung aufweist.

13. Kombination nach einem der Ansprüche 9 bis 12,
**dadurch gekennzeichnet,**
**dass** das Funktionsteil (6) eine Tragwand (30) aufweist, an der zwei voneinander abgewandten Seiten jeweils wenigstens eine Leitschaufel (29) angeordnet ist.

14. Kombination nach Anspruch 12 oder 13,
**dadurch gekennzeichnet,**
**dass** zumindest eine solche Leitschaufel (29) ein Gegenrastelement (22) aufweist, das zum Befestigen des Funktionsteils (6) am Tragrahmen (15) mit einem am Tragrahmen (15) ausgebildeten Rastmittel (21) zusammenwirkt.

15. Luftfiltereinrichtung für eine Frischluftanlage einer Brennkraftmaschine, insbesondere eines Kraftfahrzeugs,
- mit einem Gehäuse (2), in dem eine Kombination (4) nach einem der Ansprüche 9 bis 14 aufgenommen ist,
- wobei der Filterkörper (7) im Gehäuse (2) einen Rohraum (8) von einem Reinraum (9) trennt,
- wobei ein Reinluftpfad (10) vom Reinraum (9) durch das Funktionsteil (6) zu einem Funktionsraum (11) des Gehäuses (2) und/oder zu einem Reinluftauslass (12) des Gehäuses (2) führt,
- wobei das Funktionsteil (6) zur Umlenkung einer dem Reinluftpfad (10) folgenden Reinluftströmung vom Reinraum (9) zum Funktionsraum (11) und/oder zum Reinluftauslass (12) ausgestaltet ist.

16. Baukastensystem mit einem Filterelement (5) und mit mindestens zwei verschiedenen Funktionsteilen (6), die wahlweise am Tragrahmen (15) des Filterelements (5) befestigbar sind und die sich durch unterschiedliche Geometrien und/oder Funktionen voneinander unterscheiden, wobei das Filterelement (5) ausgestattet ist:
- mit einem Filterkörper (7) aus einem Filtermaterial,
- mit einem Dichtungsrahmen (14) aus einem Dichtungsmaterial, der einen dem Filterkörper (7) zugeordneten Filterabschnitt (16) aufweist, der den Filterkörper (7) randseitig, geschlossen umlaufend einfasst,
- mit einem Tragrahmen (15) zum Befestigen eines Funktionsteils (6),
- wobei der Tragrahmen (15) eine Funktionsteilöffnung (18) aufweist und geschlossen umlaufend einfasst,
- wobei der Dichtungsrahmen (14) einen dem Tragrahmen (15) zugeordneten Funktionsabschnitt (17) aufweist, der den Tragrahmen (15) randseitig, geschlossen umlaufend einfasst,
- wobei am Tragrahmen (15) Rastmittel (21) ausgebildet sind, die zum Befestigen des Funktionsteils (6) am Tragrahmen (15) mit dazu komplementären Gegenrastmitteln (22) zusammenwirken, die am Funktionsteil (6) ausgebildet sind, und
- wobei der Tragrahmen (15) bezüglich des Dichtungsrahmens (14) und des Funktionsteils (6) ein separates Bauteil ist, so dass mit dem Baukastensystem eine Kombination (4) nach einem der Ansprüche 9 bis 14 herstellbar ist.

## Claims

1. Filter element for an air filter device (1) of a fresh air system of an internal combustion engine, in particular a motor vehicle,
- with a filter body (7) made from a filter material,
- with a sealing frame (14) made from a sealing material, which has a filter section (16) assigned to the filter body (7), which filter section surrounds the edge of the filter body (7) in a circumferentially closed manner,
**characterised by**
- a support frame (15) for securing a functional part (6),
- wherein the support frame (15) has a functional part opening (18) and surrounds in a circumferentially closed manner,
- wherein the sealing frame (14) has a functional section (17) assigned to the support frame (15), which functional section surrounds the edge of the support frame (15) in a circumferentially closed manner,
- wherein on the support frame (15) latching means (21) are formed, which for fixing the functional part (6) onto the support frame (15) cooperate with complementary counter latching means (22) which are formed on the functional part (6),
- wherein the support frame (15) is a separate component relative to the sealing frame (14) and the functional part (6).

2. Filter element according to claim 1,
**characterised in that**
the functional part opening (18) is fully open.

3. Filter element according to claim 1 or 2,
**characterised in that**
the support frame (15) only forms a surround closing circumferentially around the functional part opening (18) and is provided for securing the respective functional part (6), which is a separate component with respect to the support frame (15).

4. Filter element according to any of claims 1 to 3,
**characterised in that**
the sealing frame (14) has a frame section (19), which is assigned jointly to the filter section (16) and the functional section (17) and which extends along the filter body (7) and along the support frame (15).

5. Filter element according to any of claims 1 to 4,
**characterised in that**
- the sealing frame (14) is foam moulded onto the filter body (7) and onto the support frame (15), and/or
- wherein the sealing frame (14) is made from a foamed sealing material and the support frame (15) is made from an injection-moulded plastic or metal.

6. Filter element according to any of claims 1 to 5,
**characterised in that**
the support frame (15) is embedded into the sealing material of the sealing frame (14).

7. Filter element according to any of claims 1 to 6,
**characterised in that**
the sealing frame (14) extends in a sealing plane (24), in which the filter section (16) and the functional section (17) are arranged next to one another.

8. Filter element according to any of claims 1 to 7,
**characterised in that**
the filter body (7) is configured as a plate filter element, the filter material of which is pleated.

9. Combination of a filter element (5) according to any of claims 1 to 8 and a functional part (6), which is fixed onto the support frame (15) of the filter element (5).

10. Combination according to claim 9,
**characterised in that**
the functional part (6) has a functional part frame (26) shaped to be complementary to the support frame (15), wherein the support frame (15) in the mounted state is in closed circumferential contact with the functional part frame (26) around the edge.

11. Combination according to claim 9 or 10,
**characterised in that**
the functional part (6) in the functional part opening (18) forms at least one flow-through region (27) and at least one non-flow-through region (28).

12. Combination according to any of claims 9 to 11,
**characterised in that**
the functional part (6) has at least one guide vane (29) for guiding the flow.

13. Combination according to any of claims 9 to 12,
**characterised in that**
the functional part (6) has a support wall (30), on which on two sides facing away from one another at least one guide vane (29) is arranged respectively.

14. Combination according to claim 12 or 13,
**characterised in that**
at least one such guide vane (29) has a counter latching element (22) which for fixing the functional part (6) onto the support frame (15) cooperates with a latching means (21) formed on the support frame (15).

15. Air filter device for a fresh air system of an internal combustion engine, in particular a motor vehicle,
- with a housing (2) in which a combination (4) according to any of claims 9 to 14 is mounted,
- wherein the filter body (7) in the housing (2) separates an untreated chamber (8) from a clean chamber (9),
- wherein a clean air path (10) leads from the clean chamber (9) through the functional part (6) to a functional chamber (11) of the housing (2) and/or to a clean air outlet (12) of the housing (2),
- wherein the functional part (6) is configured for guiding a clean air flow following the clean air path (10) from the clean chamber (9) to the functional chamber (11) and/or to the clean air outlet (12).

16. Modular system having a filter element (5) and at least two different functional parts (6) which are optionally connectable to the support frame (15) of the filter element (5) and which differ from one another by having different geometries and/or functions, wherein the filter element (5) is provided:
- with a filter body (7) made from a filter material,
- with a sealing frame (14) made from a sealing material, which has a filter section (16) assigned to the filter body (7), which filter section surrounds the edge of the filter body (7) in a circumferentially closed manner,
- with a support frame (15) for securing a functional part (6),
- wherein the support frame (15) has a functional part opening (18) and surrounds in a circumferentially closed manner,
- wherein the sealing frame (14) has a functional section (17) assigned to the support frame (15), which functional section surrounds the edge of the support frame (15) in a circumferentially closed manner,
- wherein on the support frame (15) latching means (21) are formed, which for fixing the functional part (6) onto the support frame (15) cooperate with complementary counter latching means (22) which are formed on the functional part (6), and
- wherein the support frame (15) is a separate component with respect to the sealing frame (14) and the functional part (6),
so that with the modular system a combination (4) can be produced according to any of claims 9 to 14.

## Revendications

1. Élément de filtre pour un dispositif de filtration d'air (1) d'une installation d'air frais d'un moteur à combustion d'air, en particulier d'un véhicule automobile,
- avec un corps de filtre (7) réalisé à partir d'un matériau filtrant,
- avec un cadre d'étanchéité (14) réalisé à partir d'un matériau d'étanchéité, qui présente une section de filtre associée au corps de filtre (7), qui entoure le corps de filtre (7) circonférentiellement de manière fermée sur les bords,
**caractérisé par**
- un cadre de support (15) pour fixer une partie fonctionnelle (6),
- dans lequel le cadre de support (15) présente et entoure circonférentiellement de manière fermée une ouverture de la partie fonctionnelle (18),
- dans lequel le cadre d'étanchéité (14) présente une section fonctionnelle (17) associée au cadre de support (15), qui entoure le cadre de support (15) circonférentiellement de manière fermée sur les bords,
- dans lequel des moyens d'encliquetage (21) sont réalisés au niveau du cadre de support (15), lesquels interagissent pour fixer la partie fonctionnelle (6) au niveau du cadre de support (15) avec des contre-moyens d'encliquetage (22) complémentaires à ceux-ci, qui sont réalisés au niveau de la partie fonctionnelle (6),
- dans lequel le cadre de support (15) concernant le cadre d'étanchéité (14) et la partie fonctionnelle (6) est un composant distinct.

2. Élément de filtre selon la revendication 1,
**caractérisé en ce que**
l'ouverture de partie fonctionnelle (18) est complètement ouverte.

3. Élément de filtre selon la revendication 1 ou 2,
**caractérisé en ce que**
le cadre de support (15) constitue uniquement une enceinte fermée circonférentiellement autour de l'ouverture de partie fonctionnelle (18) et est prévu pour fixer la partie fonctionnelle (6) respective, qui, concernant le cadre de support (15), est un composant distinct.

4. Élément de filtre selon l'une quelconque des revendications 1 à 3,
**caractérisé en ce que**
le cadre d'étanchéité (14) présente une section de cadre (19), qui est associée conjointement à la section de filtre (16) et à la section fonctionnelle (17) et qui s'étend le long du corps de filtre (7) et le long du cadre de support (15).

5. Élément de filtre selon l'une quelconque des revendications 1 à 4,
**caractérisé en ce que**
- le cadre d'étanchéité (14) est moulé par moussage sur le corps de filtre (7) et sur le cadre de support (15), et/ou
- dans lequel le cadre d'étanchéité (14) est fabriqué à partir d'un matériau d'étanchéité moussé et le cadre de support (15) est fabriqué à partir d'une matière plastique moulée par injection et à partir de métal.

6. Élément de filtre selon l'une quelconque des revendications 1 à 5,
**caractérisé en ce que**
le cadre de support (15) est incorporé dans le matériau d'étanchéité du cadre d'étanchéité (14).

7. Élément de filtre selon l'une quelconque des revendications 1 à 6,
**caractérisé en ce que**
la cadre d'étanchéité (14) s'étend dans un plan d'étanchéité (24), dans lequel la section de filtre (16) et la section fonctionnelle (17) sont disposées côte à côte.

8. Élément de filtre selon l'une quelconque des revendications 1 à 7,
**caractérisé en ce que**
le corps de filtre (7) est agencé comme élément de filtre à plaques, dont le matériau filtrant est plissé.

9. Combinaison à partir d'un élément de filtre (5) selon l'une quelconque des revendications 1 à 8 et une partie fonctionnelle (6), qui est fixée au niveau du cadre de support (15) de l'élément de filtre (5).

10. Combinaison selon la revendication 9,
**caractérisée en ce que**
la partie fonctionnelle (6) présente un cadre de partie fonctionnelle (26) formé de manière complémentaire au cadre de support (15), dans laquelle le cadre de support (15) à l'état monté est en contact circonférentiellement de manière fermée sur les bords avec le cadre de partie fonctionnelle (26).

11. Combinaison selon la revendication 9 ou 10,
**caractérisé en ce que**
la partie fonctionnelle (6) réalise dans l'ouverture de partie fonctionnelle (18) au moins une zone pouvant être traversée (27) et au moins une zone ne pouvant pas être traversée (28).

12. Combinaison selon l'une quelconque des revendications 9 à 11,
**caractérisée en ce que**
la partie fonctionnelle (6) présente au moins une aube directrice (29) pour la direction d'écoulement.

13. Combinaison selon l'une quelconque des revendications 9 à 12,
**caractérisée en ce que**
la partie fonctionnelle (6) présente une paroi portante (30), au moins une aube directrice (29) est disposée respectivement sur les deux côtés opposés l'un à l'autre.

14. Combinaison selon la revendication 12 ou 13,
**caractérisée en ce qu'**
au moins une telle aube directrice (29) présente un contre-élément d'encliquetage (22), qui interagit pour fixer la partie fonctionnelle (6) au niveau du cadre de support (15) avec un moyen d'encliquetage (21) réalisé au niveau du cadre de support (15).

15. Dispositif de filtration d'air pour une installation d'air frais d'un moteur à combustion d'air, en particulier d'un véhicule automobile,
- avec un boîtier (2), dans lequel une combinaison (4) selon l'une quelconque des revendications 9 à 14 est reçue,
- dans lequel le corps de filtre (7) dans le boîtier (2) sépare un espace non purifié (8) d'un espace purifié (9),
- dans lequel un chemin d'air pur (10) mène de l'espace purifié (9) à travers la partie fonctionnelle (6) vers un espace fonctionnel (11) du boîtier (2) et/ou vers une sortie d'air pur (12) du boîtier (2),
- dans lequel la partie fonctionnelle (6) est agencée pour dévier un chemin d'air pur (10) de l'écoulement d'air pur suivant de l'espace purifié (9) vers l'espace fonctionnel (11) et/ou vers la sortie d'air pur (12).

16. Système modulaire avec un élément de filtre (5) et au moins deux parties fonctionnelles différentes (6), qui peuvent être fixées sélectivement au niveau du cadre de support (15) de l'élément de filtre (5) et qui se distinguent l'une de l'autre par des géométries et/ou des fonctions différentes, dans lequel l'élément de filtre (5) est équipé :
- d'un corps de filtre (7) réalisé à partir d'un matériau filtrant,
- d'un cadre d'étanchéité (14) réalisé à partir d'un matériau d'étanchéité, qui présente une section de filtre (16) associée au corps de filtre (7), qui entoure le corps de filtre (7) circonférentiellement de manière fermée sur les bords,
- d'un cadre de support (15) pour fixer une partie fonctionnelle (6),
- dans lequel le cadre de support (15) présente et entoure circonférentiellement de manière fermée une ouverture de partie fonctionnelle (18),
- dans lequel le cadre d'étanchéité (14) présente une section fonctionnelle (17) associée au cadre de support (15), qui entoure le cadre de support (15) circonférentiellement de manière fermée sur les bords,
- dans lequel des moyens d'encliquetage (21) sont réalisés au niveau du cadre de support (15), qui interagissent pour fixer la partie fonctionnelle (6) au niveau du cadre de support (15) avec des contre-moyens d'encliquetage (22) complémentaires, qui sont réalisés au niveau de la partie fonctionnelle (6),
- dans lequel le cadre de support (15), concernant le cadre d'étanchéité (14) et la partie fonctionnelle (6), est un composant distinct,
de sorte qu'une combinaison (4) selon l'une quelconque des revendications 9 à 14 peut être fabriquée avec le système modulaire.
